# EUROPÄISCHE PATENTSCHRIFT

(11) **EP 1 520 752 B1**
(45) Veröffentlichungstag und Bekanntmachung des Hinweises auf die Patenterteilung: **01.10.2008**
(21) Anmeldenummer: 04016918.7
(22) Anmeldetag: 17.07.2004
(51) Int. Cl.: B60R 16/02, G01R 31/36

(54) **Energiebordnetz mit verbesserter Ladestrategie der Stützbatterie und zugehöriges Verfahren**
Energy board net with improved charging strategy for the supplementary battery and respective method
Réseau de bord à stratégie de recharge améliorée de la batterie supplémentaire et méthode correspondante

(30) Priorität: 30.09.2003 DE 10345310
(43) Veröffentlichungstag der Anmeldung: 06.04.2005
(73) Patentinhaber: ROBERT BOSCH GMBH, 70442 Stuttgart (DE)
(72) Erfinder: Beck, Markus, 71711 Steinheim (DE); Bauer, Uwe, 71701 Schwieberdingen (DE)

(56) Entgegenhaltungen:
- EP-A2- 0 987 146
- EP-B- 1 056 623
- DE-A- 4 028 242
- US-A- 4 876 513
- US-A- 5 488 283

## Beschreibung

Die Erfindung betrifft ein Energiebordnetz mit verbesserter Ladestrategie der Stützbatterie und ein zugehöriges Verfahren.

### Stand der Technik

Es sind bereits Kraftfahrzeuge bekannt, die mit einer elektrohydraulischen Bremse ausgestattet sind. Eine derartige elektrohydraulische Bremse ist ein Hochleistungsverbraucher mit erhöhten Anforderungen an die Verfügbarkeit. Das Energiebordnetz derartiger Kraftfahrzeuge muss folglich diesen erhöhten Anforderungen gerecht werden.

Weiterhin sind bereits Kraftfahrzeuge bekannt, die mit einer elektromechanischen Parkbremse ausgestattet sind. Auch bei einer elektromechanischen Parkbremse handelt es sich um einen Hochleistungsverbraucher mit erhöhten Anforderungen an die Verfügbarkeit. Folglich muss auch das Energiebordnetz eines Kraftfahrzeugs, welches eine elektromechanische Parkbremse aufweist, erhöhten Anforderungen gerecht werden.

In der DE 102 28 350.8 wird ein Energiebordnetz beschrieben. Der dort angegebene Hochleistungsverbraucher ist ein elektrischer Zusatzverdichter. Bei einem elektrischen Zusatzverdichter handelt es sich um einen Hochleistungsverbraucher, dessen Funktionen nur sehr begrenzt sicherheitsrelevant sind. Untersuchungen haben gezeigt, dass ein elektrischer Zusatzverdichter in typischen Fahrzyklen nur in ca. 5% der Gesamtdauer elektrische Energie aufnimmt. Die vom elektrischen Zusatzverdichter aufgenommene Durchschnittsleistung ist mit 25 W gering. Dies erlaubt es, eine dem elektrischen Zusatzverdichter zugeordnete zweite Batterie, deren Hauptaufgabe die Versorgung des elektrischen Zusatzverdichters ist, in den verbleibenden 95% der Gesamtdauer des Fahrzyklus aus dem Bordnetz nachzuladen. Die zweite Batterie und der elektrische Zusatzverdichter sind Bestandteile eines Inselnetzes, welches über ein steuerbares Lade- und Trennmodul an das übrige Bordnetz anschaltbar und von diesem trennbar ist. Die zugehörige Ansteuerung des Lade- und Trennmoduls erfolgt durch ein elektrisches Energiemanagement. Ein Anschalten der zweiten Batterie an das Bordnetz erfolgt zum Nachladen der zweiten Batterie aus dem Bordnetz und auch bei einem Starten des Verbrennungsmotors, um Spannungseinbrüche auf dem Bordnetz zu vermeiden bzw. zu begrenzen. Ein Abtrennen der zweiten Batterie vom Bordnetz erfolgt stets bei einer Aktivierung des elektrischen Zusatzverdichters, um Rückwirkungen auf das übrige Bordnetz bzw. die daran angeschlossenen Verbraucher zu vermeiden. Ein Abtrennen der zweiten Batterie vom Bordnetz erfolgt auch dann, wenn im Bordnetz Fehler erkannt werden, und in Ruhephasen.

In der DE 101 50 379 A1 ist eine redundante Energieversorgung für sicherheitsrelevante Verbraucher in einem Bordnetz beschrieben. In diesem bekannten Bordnetz werden die sicherheitsrelevanten Verbraucher jeweils über zwei separate Versorgungsleitungen mit elektrischer Energie versorgt. Dabei ist jeder der Verbraucher über eine erste Versorgungsleitung an eine erste Energiequelle und über eine zweite Versorgungsleitung an eine zweite Energiequelle angeschlossen. Bei einem Ausfall einer der Energiequellen oder einem Fehler in einer der Versorgungsleitungen übernimmt jeweils die andere, redundante Versorgungsleitung die Versorgung des Verbrauchers.

Aus der DE 101 55 670 A1 ist ein Verfahren zur Stabilisierung der Versorgungsspannung in einem Kfz-Bordnetz bekannt. Dieses bekannte Bordnetz wird von einer Batterie gespeist, an die mehrere Verbraucher angeschlossen sind. Zur Stabilisierung der Versorgungsspannung wird zunächst hilfsweise ein elektrischer Verbraucher eingeschaltet, um die vom Generator gelieferte Leistung zu erhöhen. Wenn eine Versorgungsspannung unter einen vorgegebenen Wert absinkt oder durch Einschaltung eines neuen Verbrauchers absinken würde, wird der hilfsweise zugeschaltete Verbraucher ausgeschaltet.

Weiterhin wird in der DE 103 01 528.0 ein Energiebordnetz zur Versorgung eines Hochleistungsverbrauchers mit erhöhten Anforderungen an die Verfügbarkeit beschrieben. Dieses Energiebordnetz weist eine steuerbare Lade- und Trenneinheit auf. Diese enthält erste Schaltmittel, über welche ein erster Energiespeicher des Bordnetzes mit dem Hochleistungsverbraucher verbindbar ist. Die steuerbare Lade- und Trenneinheit weist weiterhin zweite Schaltmittel auf, über welche ein zweiter Energiespeicher des Bordnetzes mit dem Hochleistungsverbraucher verbindbar ist. Ferner ist die steuerbare Lade- und Trenneinheit mit dritten Schaltmitteln versehen, über welche der zweite Energiespeicher mit dem Bordnetz verbindbar ist. Bei einem Laden des zweiten Energiespeichers ist die erste Schalteinheit geschlossen, die zweite Schalteinheit geöffnet und die dritte Schalteinheit geschlossen, so dass der zweite Energiespeicher aus dem Bordnetz geladen wird. Die Ladephase des zweiten Energiespeichers wird eingeleitet, wenn dessen Ruhespannung einen vorgegebenen, applikationsabhängigen Schwellenwert unterschreitet.

Das Dokument EP 0 987 146 beschreibt ein Zwei-Batteriensystem und ein Verfahren zu dessen Ansteuerung. Hier können die zwei Batterien durch einen Leistungsschalter und einen parallel geschalteten Halbleiterschalter, der aus zwei anti-seriell geschalteten Mosfets besteht, verbunden werden.

In EP 1 056 623 wird eine Vorrichtung zur elektrischen Energieversorgung von sicherheitsrelevanten Systemen in einem Kraftfahrzeug beschrieben.

Die Druckschrift US 4 876 513 beschreibt ein Verfahren, das den Ladezustand der Batterie aus einer Spannungsmessung ermittelt, wobei der Spannungsabfall am Innenwiderstand rechnerisch ermittelt wird, um einen genaueren Wert für den Ladezustand zu erhalten.

### Vorteile der Erfindung

Gegenüber diesem Stand der Technik weist ein Energiebordnetz gemäß der Erfindung, bei welchem der zweite Energiespeicher durch eine Zuschaltung unter Verwendung von vorzugsweise zwei Halbleiterschaltern nachgeladen werden kann, eine verbesserte Ladebilanz des zweiten Energiespeichers auf.

Insbesondere wird durch die Verwendung von zwei Halbleiterschaltern im Ladeweg des zweiten Energiespeichers die Voraussetzung dafür geschaffen, dass der Ladevorgang bei Bedarf kurzzeitig unterbrochen werden kann. Dies ist beispielsweise dann vorteilhaft, wenn während der Nachladung des zweiten Energiespeichers hochdynamische Verbraucher des Bordnetzes dem Bordnetz kurzzeitig eine hohe Leistung entnehmen. Dies könnte dazu führen, dass während des Ladevorgangs des zweiten Energiespeichers ein Entladevorgang desselben erfolgt. Dies wird durch die genannte kurzzeitige Unterbrechung des Ladevorgangs vermieden.

Vorzugsweise weisen die Schaltmittel, über welche die Nachladung des zweiten Energiespeichers erfolgt, zwei antiseriell in Reihe geschaltete Transistoren auf. Dadurch ist sichergestellt, dass der Signalweg zwischen dem zweiten Energiespeicher und dem Bordnetz vollständig gesperrt werden kann. Insbesondere ist durch die antiserielle Schaltung der Transistoren und bei gesperrten Transistoren sichergestellt, dass auch über die Substratdioden der Transistoren kein Stromfluss erfolgt.

Vorzugsweise erfolgt das Erkennen der Notwendigkeit einer Unterbrechung des Ladevorgangs des zweiten Energiespeichers durch eine Auswertung des aus dem zweiten Energiespeicher während des Ladevorgangs fließenden Stroms. Ist dieser größer als ein vorgebbarer niedriger Schwellwert, beispielsweise 0 Ampere, dann wird der Ladevorgang des zweiten Energiespeichers unterbrochen.

Eine Beendigung des Ladevorgangs des zweiten Energiespeichers erfolgt vorzugsweise dann, wenn ein während des Ladevorgangs ermittelter Ladezustandswert des zweiten Energiespeichers einen vorgegebenen Ladezustandssollwert erreicht hat oder dann, wenn eine vorgegebene Ladezeit abgelaufen ist.

Die Ladebilanz des zweiten Energiespeichers wird weiter verbessert, wenn während des Ladevorgangs mindestens eine den Ladevorgang fördernde Zusatzmaßnahme in die Wege geleitet wird, beispielsweise eine Anhebung der Generatorsollspannung, eine Reduktion der von den Verbrauchern aufgenommenen Leistung oder eine Anhebung der Leerlaufdrehzahl.

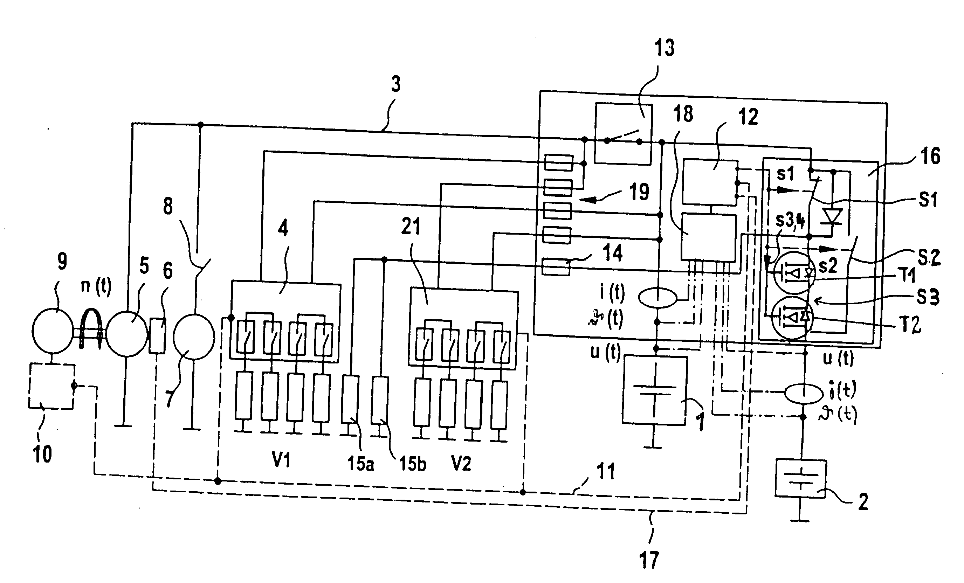

Weitere vorteilhafte Eigenschaften der Erfindung ergeben sich aus deren beispielhafter Erläuterung anhand der Zeichnung.

### Zeichnung

Die Figur zeigt ein Blockschaltbild eines Energiebordnetzes zur Versorgung eines Hochleistungsverbrauchers mit erhöhten Anforderungen an die Verfügbarkeit.

### Beschreibung

Das in der Figur dargestellte Energiebordnetz enthält als ersten Energiespeicher 1 die Hauptbatterie eines Kraftfahrzeugs und als zweiten Energiespeicher 2 eine Stützbatterie.

Die Hauptbatterie 1 steht über einen Batterietrennschalter 13 mit einem Bordnetzgenerator 5 in Verbindung. Dieser Bordnetzgenerator ist ein riemenbetriebener Generator mit Regler 6. Weiterhin ist der Starter 7 dargestellt, der über das Starter-Relais 8 mit dem Bordnetz 3 verbunden ist. Alternativ zu den Bauteilen 5 - 8 kann auch ein auf der Kurbelwelle des Kraftfahrzeugs angeordneter integrierter Startergenerator vorgesehen sein.

Weiterhin steht die Hauptbatterie 1 über den Batterietrennschalter 13 und die Sicherungen 19 mit einem ersten Signal- und Leistungsverteiler 4 und einem zweiten Signal- und Leistungsverteiler 21 in Verbindung. An die Ausgänge des Signal- und Leistungsverteilers 4 sind Verbraucher V1 angeschlossen. Die Ausgänge des Signal- und Leistungsverteilers 21 sind mit Verbrauchern V2 verbunden. Die den Verbrauchern V1 und V2 vorgeschalteten Signalund Leistungsverteiler 4 und 21 enthalten unter anderem Feinsicherungen, Relais und/oder Schalter für eine Zuund Abschaltung der genannten Verbraucher im Sinne eines Verbrauchermanagements.

Die Stützbatterie 2 ist über eine Lade- und Trenneinheit 16 mit der Hauptbatterie 1 verbunden und steht weiterhin über die Lade- und Trenneinheit 16 und den in der Regel geschlossenen Batterietrennschalter 13 mit dem Bordnetz 3 in Verbindung. Weiterhin ist die Stützbatterie 2 über die Lade- und Trenneinheit 16 und eine Sicherung 14 auch an zwei parallel zueinander angeordnete Hochleistungsverbraucher 15a, 15b mit erhöhten Anforderungen an die Verfügbarkeit angeschlossen. Beim Hochleistungsverbraucher 15a handelt es sich um die Ventile, das Steuergerät und den Pumpenmotor einer elektrohydraulischen Bremse. Der Hochleistungsverbraucher 15b ist eine elektromechanische Parkbremse.

Die Lade- und Trenneinheit 16 weist eine erste Schalteinheit S1, eine zweite Schalteinheit S2 und eine dritte Schalteinheit S3 auf. Die erste Schalteinheit S1, vorzugsweise ein bistabiles Relais mit paralleler Diode, ist im Pfad zwischen der Hauptbatterie 1 und den Hochleistungsverbrauchern 15a und 15b angeordnet. Die zweite Schalteinheit S2, vorzugsweise ein Relais, ist zwischen der Hauptbatterie 1 und der Stützbatterie 2 und - bei geschlossenem Batterietrennschalter 13 - auch zwischen der Stützbatterie 2 und dem Bordnetz 3 angeordnet. Die dritte Schalteinheit S3, die zwei antiseriell in Reihe geschaltete Feldeffekttransistoren T1 und T2 aufweist, befindet sich im Pfad zwischen der Stützbatterie 2 und den Hochleistungsverbrauchern 15a und 15b. Die Durchlassrichtung der Substratdiode des Transistors T1 verläuft vom Bordnetz gesehen in Richtung der Stützbatterie 2, die Durchlassrichtung der Substratdiode des Transistors T2 in Gegenrichtung dazu. Sind die erste Schalteinheit S1, die dritte Schalteinheit S3 und der Batterietrennschalter 13 jeweils im geschlossenen Zustand, dann ist die Stützbatterie 2 mit dem Bordnetz 3 verbunden.

Der Generator 5 wird im Betrieb des Kraftfahrzeugs von einem Verbrennungsmotor 9 angetrieben, dessen Betrieb von einem Motormanagement 10 gesteuert wird. Das Motormanagement 10 steht über den CAN-Bus 11 mit einem elektrischen Energiemanagement 12 in Verbindung. Dieses elektrische Energiemanagement 12 ist für eine intelligente Koordination des Bordnetz-Energieflusses, eine optimierte Nachladung der an das Bordnetz 3 angeschlossenen Batterien 1 und 2, die Steuerung der Lade- und Trenneinheit 16, eine Beeinflussung der Generatorregelung, beispielsweise unter Verwendung einer bitsynchronen Schnittstelle 17, das Verbrauchermanagement und eine Beeinflussung des Motormanagements 10 über den CAN-Bus 11 vorgesehen.

Das elektrische Energiemanagement 12 bezieht Eingangssignale von einer Batteriezustandserkennung 18, die an die erste Batterie 1 und die zweite Batterie 2 angeschlossen ist, um deren Zustände zu ermitteln. Zu diesem Zweck wertet die Batteriezustandserkennung 18 die Batteriespannungen u(t), die Batterieströme i(t) und die Batterietemperaturen δ(t) der genannten Batterien aus.

Zur Steuerung der Lade- und Trenneinheit 16 stellt das Energiemanagement 12 Steuersignale s1 für die erste Schalteinheit S1, Steuersignale s2 für die zweite Schalteinheit S2 und Steuersignale s3 und s4 für die dritte Schalteinheit S3 zur Verfügung, wobei die Steuersignale s3 dem Schalter T1 und die Steuersignale s4 dem Schalter T2 zugeführt werden. Weiterhin generiert das Energiemanagement 12 auch Schaltsignale zur Zu- und Abschaltung der Verbraucher V1 und V2.

Das in der Figur dargestellte Energiebordnetz ist in verschiedenen Betriebsarten betreibbar.

Eine dieser Betriebsarten ist der Ruhezustand. In diesem Ruhezustand ist die erste Schalteinheit S1 durchlässig gestaltet, d. h. geschlossen, die zweite Schalteinheit S2 ist geöffnet und die dritte Schalteinheit S3 ist ebenfalls geöffnet. Folglich sind im Ruhezustand das Bordnetz 3 und auch die Hochleistungsverbraucher 15a und 15b mit der Hauptbatterie 1 verbunden. Es tritt lediglich ein Ruhestromverbrauch auf.

Eine weitere Betriebsart ist der Motorstart. In dieser Motorstartbetriebsart ist die erste Schalteinheit S1 geöffnet, die zweite Schalteinheit S2 geöffnet und die dritte Schalteinheit S3 geschlossen. Demzufolge sind die Hochleistungsverbraucher 15a und 15b in der Startbetriebsart von der Hauptbatterie 1 getrennt und werden ausschließlich aus der Stützbatterie 2 versorgt. Folglich hat ein in der Startphase auftretender Spannungseinbruch im Bordnetz 3 keinen Einfluss auf die Hochleistungsverbraucher 15a und 15b. Das elektrische Energiemanagement 12 erzeugt die notwendigen Steuersignale für die Schalteinheiten S1, S2 und S3 entweder nach einem Aufwecken des Steuergerätes der elektrohydraulischen Bremse oder - bei Vorliegen eines elektrischen Zündschlosses - durch Auswertung des Klemme 50-Signals, wobei dem elektrischen Energiemanagement 12 die genannten Informationen über den CAN-Bus 11 zugeleitet werden. Sobald der Generator 5 Energie in das Bordnetz 3 einspeist, was durch Auswertung des an Klemme 61 verfügbaren Signals erkannt wird, oder nach Ablauf eines vorgegebenen Zeitintervalls wird die Schalteinheit S1 geschlossen und anschließend die Schalteinheit S3 geöffnet, um den Normalbetrieb herbeizuführen.

In dieser Normalbetriebsart ist die erste Schalteinheit S1 geschlossen, die zweite Schalteinheit S2 geöffnet und die dritte Schalteinheit S3 ebenfalls geöffnet. In dieser Betriebsart erfolgt ein Nachladen der Hauptbatterie 1. Die Hauptbatterie puffert in dieser Betriebsart Leistungsspitzen für das gesamte Bordnetz.

Eine weitere Betriebsart ist das Nachladen der Stützbatterie 2. In dieser Betriebsart ist die erste Schalteinheit S1 geschlossen, die zweite Schalteinheit S2 geöffnet und die dritte Schalteinheit S3 geschlossen. Folglich kann der Ladevorgang der Stützbatterie 2 über die geschlossenen Schalter S1 und S2 bzw. S1, T1 und T2 erfolgen. Der Nachladevorgang wird gestartet, wenn ein vorgegebener unterer Ladezustandsgrenzwert SOC min der Stützbatterie unterschritten wird. Bei diesem Start des Nachladevorgangs werden bei geschlossenem Schalter S1 zunächst die beiden Schalter T1 und T2 durch Zuführung geeigneter Steuersignale s3 und s4 geschlossen. Während des Nachladevorgangs wird durch eine Messung des aus der Stützbatterie 2 herausfließenden Stromes ständig geprüft, ob dieser Strom größer als 0 Ampere ist oder nicht. Ist dies der Fall, dann wird der Nachladevorgang durch ein Öffnen des Schalters T1 unterbrochen, um eine Entladung der Stützbatterie zu verhindern. Überschreitet die gemessene Bordnetzspannung zu einem nach dieser Unterbrechung auftretenden späteren Zeitpunkt wieder einen vorgegebenen Ladespannungsgrenzwert, dann wird der Schalter T1 wieder geschlossen und dadurch der Ladevorgang der Stützbatterie fortgesetzt. Der Ladevorgang der Stützbatterie 2 wird beendet, wenn der während der Ladung berechnete Ladespannungswert der Stützbatterie 2 einen vorgegebenen Ladespannungsendwert erreicht hat. Alternativ dazu wird der Ladevorgang der Stützbatterie 2 dann beendet, wenn eine vorgegebene aktive Ladezeit, d. h. die Ladezeit, innerhalb derer beide Schalter T1 und T2 geschlossen sind, abgelaufen ist. Die vorgegebene aktive Ladezeit ist abhängig von der Batterietemperatur und der durchschnittlichen Ladespannung, die durch eine Mittelung der Bordnetzspannung während des Ladevorgangs berechnet wird.

Um für die Bordnetzspannung und die damit gekoppelte Ladespannung der Stützbatterie verbesserte Werte zu erreichen, werden während des Ladevorganges Energiemanagementmaßnahmen aktiviert. Beispielsweise erzeugt das elektrische Energiemanagement 12 während des Ladevorgangs der Stützbatterie 2 Steuersignale, aufgrund derer die Sollspannung für den Generator 5 angehoben wird, oder Steuersignale, aufgrund derer die von den Verbrauchern aufgenommene Leistung reduziert wird, oder Steuersignale, die eine Anhebung der Leerlaufdrehzahl bewirken.

Um die Diagnose der Stützbatterie weiter zu verbessern, wird die Stützbatterie automatisch nach jedem Startvorgang des Fahrzeugs kurzzeitig, beispielsweise für eine Dauer von 10 Sekunden, entladen. Diese kurzzeitige Entladung kann dadurch herbeigeführt werden, dass ein Anlauf der Pumpe der elektrohydraulischen Bremse 15a in die Wege geleitet wird. Aufgrund dieser kurzzeitigen Entladung der Stützbatterie ist die Diagnose von deren Ladungszustand unter Auswertung des Spannungsverlaufes und des bekannten Belastungsprofils verbessert.

Eine weitere Betriebsart ist der Pufferbetrieb. In dieser Pufferbetriebsart ist die erste Schalteinheit S1 geschlossen, die zweite Schalteinheit S2 geöffnet und die dritte Schalteinheit S3 geschlossen. Die Pufferbetriebsart wird dann eingeleitet, wenn die Batteriezustandserkennung 18 das Vorliegen einer zu geringen Leistungsfähigkeit der Hauptbatterie 1 erkennt. Ist dies der Fall, dann wird die dritte Schalteinheit S3 leitend geschaltet, so dass die Pufferwirkung des gesamten Bordnetzes um die Leistungsfähigkeit der Stützbatterie 2 erweitert wird.

Tritt hingegen ein plötzlicher Verlust der Leistungsfähigkeit der Hauptbatterie 1 auf, der durch die Batteriezustandserkennung 18 nicht prognostiziert werden kann und sich auch nicht in einem ansteigenden Innenwiderstand der Hauptbatterie 1 widerspiegelt, dann wird die dritte Schalteinheit S3 von einer schnellen Unterspannungserkennung in den leitenden Zustand gebracht. Diese schnelle Unterspannungserkennung ist vorzugsweise in Form eines analogen Komparators realisiert, in welchem die gemessene Spannung mit einem vorgegebenen Spannungsschwellenwert verglichen wird. Unterschreitet die gemessene Spannung den vorgegebenen Spannungsschwellenwert, dann liegt eine Unterspannung vor und es wird die dritte Schalteinheit S3 durchlässig geschaltet, um einen temporären Pufferbetrieb einzuleiten. Der genannte analoge Komparator ist Bestandteil des elektrischen Energiemanagements 12.

Besteht die Notwendigkeit, diese Pufferbetriebsart über einen längeren Zeitraum aufrechtzuerhalten, dann wird die zweite Schalteinheit S2 geschlossen und die dritte Schalteinheit S3 geöffnet. Diese Notwendigkeit besteht beispielsweise dann, wenn die Unterspannungserkennung mehrmals nacheinander ein Unterschreiten des vorgegebenen Spannungsschwellenwertes erkennt.

Eine weitere Betriebsart ist ein Notbetrieb. In dieser Notbetriebsart ist die erste Schalteinheit S1 geöffnet, die zweite Schalteinheit S2 geöffnet und die dritte Schalteinheit S3 geschlossen. Diese Betriebsart wird dann eingeleitet, wenn im Pufferbetrieb die Leistungsfähigkeit der Stützbatterie 2 nicht mehr für eine Stabilisierung des gesamten Bordnetzes ausreicht. Wird dies erkannt, dann wird die dritte Schalteinheit S3 geschlossen. Nach diesem Schließen von S3 erfolgt die Versorgung der Hochleistungsverbraucher 15a und 15b ausschließlich aus der Stützbatterie 2 um sicherzustellen, dass diese Hochleistungsverbraucher, bei denen es sich vorzugsweise um eine elektrohydraulische Bremse und eine elektromechanische Parkbremse handelt, funktionsfähig bleiben.

Wäre diese Versorgung der elektrohydraulischen Bremse und der elektromechanischen Parkbremse nicht sichergestellt, dann wären Fahrzeuge nach dem Abstellen des Verbrennungsmotors spannungslos und könnten nicht mehr festgebremst werden.

Eine weitere Betriebsart ist ein Pufferbetrieb bei ausgeschaltetem Motor. In dieser Betriebsart ist die erste Schalteinheit S1 geschlossen, die zweite Schalteinheit S2 geöffnet und die dritte Schalteinheit S3 geschlossen. Diese Pufferbetriebsart bei ausgeschaltetem Motor wird dann eingeleitet, wenn bei ausgeschaltetem Motor und rollendem Fahrzeug, d. h. v > 0 km/h, eine Unterspannung oder eine verminderte Leistungsfähigkeit der Hauptbatterie 1 festgestellt wird.

Nach alledem ist ein Energiebordnetz gemäß der Erfindung insbesondere dazu in der Lage, die im Zusammenhang mit einer elektrohydraulischen Bremse vorliegenden gesteigerten Anforderungen an die elektrische Energieversorgung in Kraftfahrzeugen zu erfüllen. Neben einer größeren Leistung mit einer maximalen Stromamplitude von 120 A zählt zu diesen Anforderungen auch eine gesteigerte Spannungsstabilität, die auch in der Startphase des Motors gegeben ist.

Eine elektromechanische Parkbremse bietet als Komfortfunktion Vorteile gegenüber einer herkömmlichen Feststellbremse oder Handbremse. In einem Energiebordnetz gemäß der Erfindung ist sichergestellt, dass die Funktion einer elektromechanischen Parkbremse auch dann gegeben ist, wenn das Fahrzeug abgestellt ist, d. h. der Motor abgeschaltet ist, oder dann, wenn die Hauptbatterie ausgefallen ist.

Die Erfindung ist auch im Zusammenhang mit anderen oder zusätzlichen Hochleistungsverbrauchern mit erhöhten Anforderungen an die Verfügbarkeit einsetzbar, beispielsweise einem automatischen "Hillholder", der das Fahrzeug bei einem Anhalten am Berg abbremst, oder bei einer Anfahrunterstützung, die das Fahrzeug bei einem Anfahren am Berg gegen ein Rückwärtsrollen absichert.

Unabhängig davon bietet ein Energiebordnetz gemäß der Erfindung auch erweiterte Diagnosefunktionen.

Der in der Figur dargestellte Batterietrennschalter 13 ist bei allen vorstehend beschriebenen Betriebsarten in geschlossenem Zustand. Er ist lediglich dazu vorgesehen, nach einem erkannten Fahrzeug-Crash die lange Starterleitung beim Vorliegen einer Batterie im Kofferraum des Fahrzeugs von der Batterie zu trennen, um die Kurzschluss- und Brandgefahr zu reduzieren.

Bezugszeichenliste
- 1: Erster Energiespeicher (Hauptbatterie)
- 2: Zweiter Energiespeicher (Stützbatterie)
- 3: Bordnetz
- 4: Signal- und Leistungsverteiler
- 5: Bordnetzgenerator
- 6: Generatorregler
- 7: Starter
- 8: Starter-Relais
- 9: Verbrennungsmotor
- 10: Motormanagement
- 11: CAN-Bus
- 12: Elektrisches Energiemanagement
- 13: Batterietrennschalter
- 14: Sicherung
- 15a: Hochleistungsverbraucher (elektrohydraulische Bremse)
- 15b: Hochleistungsverbraucher (elektromechanische Parkbremse)
- 16: Lade- und Trenneinheit
- 17: Bitsynchrone Schnittstelle
- 18: Batteriezustandserkennung
- 19: Sicherungen
- 21: Signal- und Leistungsverteiler
- V1: Verbraucher
- V2: Verbraucher
- S1, S2, S3: Schalteinheiten
- s1, s2, s3, s4: Steuersignale
- T1, T2: Feldeffekttransistoren, Halbleiterschalter

## Patentansprüche

1. Energiebordnetz für ein Kraftfahrzeug, mit
- einem Generator (5),
- einem ersten Energiespeicher (1),
- einem zweiten Energiespeicher (2),
- einer Vielzahl von an das Bordnetz (3) angeschlossenen Verbrauchern (V1,V2,15a,15b),
- einer steuerbaren Lade- und Trenneinheit (16), über welche der zweite Energiespeicher an das Bordnetz angeschlossen ist, wobei die steuerbare Lade- und Trenneinheit Schaltmittel (S3) aufweist, über welche der zweite Energiespeicher mit dem Bordnetz verbindbar ist,
- einem elektrischen Energiemanagement (12), welches Steuersignale für die Schaltmittel (S3) erzeugt, wobei
- die Schaltmittel (S3) mindestens einen Halbleiterschalter (T1), vorzugsweise zwei Halbleiterschalter (T1, T2) aufweisen und
- das elektrische Energiemanagement (12) zu einem Nachladen des zweiten Energiespeichers (2) die Schaltmittel (S3) in den geschlossenen Zustand bringt, **dadurch gekennzeichnet, dass** eine Batteriezustandserkennung (18) vorhanden ist, die die gemessenen Batteriespannungen u (t), Batterieströme i (t) und Batterietemperaturen δ(t) beider Batterien auswertet und die Bestandteil des elektrischen Energiemanagements ist

2. Energiebordnetz nach Anspruch 1, **dadurch gekennzeichnet, dass** die Schaltmittel (S3) zwei antiseriell in Reihe geschaltete Transistoren (T1,T2) aufweisen.

3. Energiebordnetz nach Anspruch 2, **dadurch gekennzeichnet, dass** die Transistoren (T1,T2) Feldeffekttransistoren sind.

4. Energiebordnetz nach einem der vorhergehenden Ansprüche, **dadurch gekennzeichnet, dass** es einen dem zweiten Energiespeicher (2) zugeordneten Stromsensor aufweist, dessen Ausgangssignal direkt oder indirekt dem elektrischen Energiemanagement (12) zugeführt wird, und das elektrische Energiemanagement (12) ein die Schaltmittel (S3) öffnendes Steuersignal (s3) erzeugt, wenn der aus dem zweiten Energiespeicher (2) fließende Strom während des Ladevorgangs des zweiten Energiespeichers größer als ein vorgebbarer niedriger Schwellwert - vorzugsweise null Ampere - ist.

5. Energiebordnetz nach Anspruch 4, **dadurch gekennzeichnet, dass** das die Schaltmittel (S3) öffnende Steuersignal (s3) demjenigen Transistor (T1) der Schaltmittel zugeführt wird, dessen Durchlassrichtung der Substratdiode vom Bordnetz in Richtung des zweiten Energiespeichers verläuft.

6. Energiebordnetz nach einem der vorhergehenden Ansprüche, **dadurch gekennzeichnet, dass** das elektrische Energiemanagement (12) den Ladevorgang des zweiten Energiespeichers (12) beendet, wenn ein während des Ladevorgangs ermittelter Ladezustandswert des zweiten Energiespeichers einen vorgegebenen Ladezustandssollwert erreicht hat.

7. Energiebordnetz nach einem der Ansprüche 1 - 5, **dadurch gekennzeichnet, dass** das elektrische Energiemanagement (12) den Ladevorgang des zweiten Energiespeichers nach Ablauf einer vorgegebenen Ladezeit beendet.

8. Energiebordnetz nach einem der vorhergehenden Ansprüche, **dadurch gekennzeichnet, dass** das elektrische Energiemanagement (12) während des Ladevorgangs des zweiten Energiespeichers mindestens eine den Ladevorgang fördernde Zusatzmaßnahme in die Wege leitet.

9. Energiebordnetz nach Anspruch 8, **dadurch gekennzeichnet, dass** eine den Ladevorgang fördernde Zusatzmaßnahme eine Generatersollspannungsanhebung, eine Reduktion der von den Verbrauchern aufgenommenen Leistung oder eine Anhebung der Leerlaufdrehzahl ist.

10. Energiebordnetz nach einem der vorhergehenden Ansprüche, **dadurch gekennzeichnet, dass** einer der Verbraucher ein Hochleistungsverbraucher (15a,15b) ist, wobei als Hochleistungsverbraucher die Ventile, das Steuergerät und der Pumpenmotor einen elektrohydraulischen Bremse anzusehen sind, der Hochleistungsverbraucher über die steuerbare Lade- und Trenneinheit (16) sowohl mit dem ersten Energiespeicher (1) als auch mit dem zweiten Energiespeicher (2) verbindbar ist, die steuerbare Lade- und Trenneinheit (16) erste Schaltmittel (S1) aufweist, über welche der erste Energiespeicher (1) mit dem Hochleistungsverbraucher (15a,15b) verbindbar ist, die steuerbare Lade- und Trenneinheit (16) zweite Schaltmittel (S2) aufweist, über welche der zweite Energiespeicher (2) mit dem Bordnetz (3) verbindbar ist, und die steuerbare Lade- und Trenneinheit (16) dritte Schaltmittel (S3) aufweist, über welche der zweite Energiespeicher (2) mit dem Hochleistungsverbraucher (15a,15b) verbindbar ist, wobei die dritten Schaltmittel diejenigen Schaltmittel sind, über welche das Nachladen des zweiten Energiespeichers (2) erfolgt.

11. Verfahren zum Nachladen der Stützbatterie eines mit einer Hauptbatterie und einer Stützbatterie versehenen Energiebordnetzes mit folgenden Schritten:
- Starten des Nachladevorganges, wenn der Ladezustand der Stützbatterie einen vorgegebenen unteren Ladezustandsgrenzwert unterschreitet,
- Messen des aus der Stützbatterie herausfließenden Stromes,
- Unterbrechen des Nachladevorgangs, wenn der aus der Stützbatterie herausfließende Strom größer als ein vorgebbarer niedriger Schwellwert - vorzugsweise null Ampere - ist,
- Messen der Bordnetzspannung,
- Fortsetzen des Nachladevorgangs, wenn die gemessene Bordnetzspannung einen vorgegebenen Ladespannungsgrenzwert überschreitet,
- Beenden des Nachladevorgangs, wenn der während des Nachladevorgangs berechnete Ladespannungswert der Stützbatterie erreicht oder wenn eine vorgegebene aktive Ladezeit abgelaufen ist, **dadurch gekennzeichnet, dass** ein Energiemanagement (12), das den Ablauf der Schritte steuert, Eingangssignale von einer Batteriezustandserkennung (18) bezieht, welche Batteriespannung u(t), Batterieströme i(t) und Batterietemperaturen δ(t) beider Batterien auswertet und so deren Ladezustände ermittelt.

12. Verfahren nach Anspruch 11, **dadurch gekennzeichnet, dass** nach einem Motorstart ein kurzzeitiges Entladen der Stützbatterie durchgeführt wird.

13. Verfahren nach Anspruch 12, **dadurch gekennzeichnet, dass** das kurzzeitige Entladen der Stützbatterie automatisch nach jedem Startvorgang des Fahrzeugs durchgeführt wird.

## Claims

1. On-board power supply system for a motor vehicle, comprising
- a generator (5),
- a first energy storage means (1),
- a second energy storage means (2),
- a multiplicity of loads (V1, V2, 15a, 15b) which are connected to the on-board supply system (3),
- a controllable charging and disconnection unit (16) by means of which the second energy storage means is connected to the on-board supply system, with the controllable charging and disconnection unit having switching means (S3) by means of which the second energy storage means can be connected to the on-board supply system,
- an electrical power management system (12) which generates control signals for the switching means (S3), with
- the switching means (S3) having at least one semiconductor switch (T1), preferably two semiconductor switches (T1, T2), and
- the electrical power management system (12) moving the switching means (S3) to the closed state for recharging the second energy storage means (2),
**characterized in that** a battery state identification means (18) is present which evaluates the measured battery voltages u(t), battery currents i(t) and battery temperatures δ(t) of the two batteries and which is a constituent part of the electrical power management system.

2. On-board power supply system according to Claim 1, **characterized in that** the switching means (S3) have two transistors (T1, T2) which are connected back-to-back in series.

3. On-board power supply system according to Claim 2, **characterized in that** the transistors (T1, T2) are field-effect transistors.

4. On-board power supply system according to one of the preceding claims, **characterized in that** it has a current sensor which is associated with the second energy storage means (2) and whose output signal is supplied directly or indirectly to the electrical power management system (12), and the electrical power management system (12) generates a control signal (s3) which opens the switching means (S3) when the current flowing out of the second energy storage means (2) is greater than a predefinable low threshold value - preferably zero amperes - during the charging process of the second energy storage means.

5. On-board power supply system according to Claim 4, **characterized in that** the control signal (s3) which opens the switching means (S3) is supplied to that transistor (T1) of the switching means whose forward direction of the substrate diode runs from the on-board supply system in the direction of the second energy storage means.

6. On-board power supply system according to one of the preceding claims, **characterized in that** the electrical power management system (12) terminates the charging process of the second energy storage means (12) when a charge state value of the second energy storage means, which charge state value is determined during the charging process, has reached a predefined desired charge state value.

7. On-board power supply system according to one of Claims 1-5, **characterized in that** the electrical power management system (12) terminates the charging process of the second energy storage means after a predefined charging time elapses.

8. On-board power supply system according to one of the preceding claims, **characterized in that** the electrical power management system (12) lines up at least one additional measure, which assists the charging process, during the charging process of the second energy storage means.

9. On-board power supply system according to Claim 8, **characterized in that** an additional measure which assists the charging process is an increase in the desired generator voltage, a reduction in the power consumed by the loads or an increase in the idling speed.

10. On-board power supply system according to one of the preceding claims, **characterized in that** one of the loads is a high-power load (15a, 15b), with the valves, the controller and the pump motor of an electrohydraulic brake being regarded as high-power loads, the high-power load can be connected both to the first energy storage means (1) and to the second energy storage means (2) by means of the controllable charging and disconnection unit (16), the controllable charging and disconnection unit (16) has first switching means (S1) by means of which the first energy storage means
(1) can be connected to the high-power load (15a, 15b), the controllable charging and disconnection unit (16) has second switching means (S2) by means of which the second energy storage means (2) can be connected to the on-board supply system (3), and the controllable charging and disconnection unit (16) has third switching means (S3) by means of which the second energy storage means (2) can be connected to the high-power load (15a, 15b), with the third switching means being those switching means by means of which the second energy storage means(2) is recharged.

11. Method for recharging the back-up battery of an on-board power supply system which is provided with a main battery and a back-up battery, comprising the following steps:
- starting the recharging process when the charge state of the back-up battery falls below a predefined lower charge state limit value,
- measuring the current flowing out of the back-up battery,
- interrupting the recharging process when the current flowing out of the back-up battery is greater than a predefinable low threshold value - preferably zero amperes -,
- measuring the on-board supply system voltage,
- continuing the recharging process when the measured on-board supply system voltage exceeds a predefined charging voltage limit value,
- terminating the recharging process when the charging voltage value of the back-up battery which is calculated during the recharging process is reached or when a predefined active charging time has elapsed, **characterized in that** a power management system (12), which controls the execution of the steps, obtains input signals from a battery state identification means (18) which evaluates the battery voltage u(t), battery currents i(t) and battery temperatures δ(t) of the two batteries and thus determines their charge states.

12. Method according to Claim 11, **characterized in that** the back-up battery is briefly discharged after the motor is started.

13. Method according to Claim 12, **characterized in that that** the back-up battery is briefly discharged automatically after each starting process of the vehicle.

## Revendications

1. Réseau de bord pour un véhicule automobile comportant :
- un générateur (5),
- un premier accumulateur d'énergie (1),
- un second accumulateur d'énergie (2),
- un ensemble de consommateurs (V1, V2, 15a, 15b) raccordés au réseau de bord (3),
- une unité de charge et de coupure (16), commandée, pour relier le second accumulateur au réseau de bord,
l'unité de charge et de coupure, commandée, comportant des moyens de commutation (S3) pour relier le second accumulateur au réseau de bord,
- un gestionnaire d'énergie électrique (12) qui génère des signaux de commande pour les moyens de commutation (S3),
- les moyens de commutation (S3) comprenant au moins un commutateur semi-conducteur (T1), de préférence deux commutateurs semiconducteurs (T1, T2) et,
- le gestionnaire d'énergie électrique (12) ferme les moyens de commutation (S3) pour la recharge du second accumulateur (2),
**caractérisé par** :
- un détecteur d'état de batterie (18) qui exploite les tensions de batterie u(t) mesurées, les intensités i(t) traversant les batteries et les températures δ (t) des deux batteries, et qui fait partie de la gestion de l'énergie électrique.

2. Réseau de bord selon la revendication 1,
**caractérisé en ce que**
les moyens de commutation (S3) comprennent deux transistors (T1, T2) à montage en série, antiparallèles.

3. Réseau de bord selon la revendication 2,
**caractérisé en ce que**
les transistors (T1, T2) sont des transistors à effet de champ.

4. Réseau de bord selon l'une de revendications précédentes,
**caractérisé en ce qu'**
il comporte un capteur de courant associé au second accumulateur (2) dont le signal de sortie est appliqué directement ou indirectement à la gestion d'énergie électrique (12) et cette gestion d'énergie électrique (12) génère un signal de commande (s3) ouvrant les moyens de commutation (S3) si l'intensité du courant sortant du second accumulateur (2) au cours de la phase de charge de ce second accumulateur (2)est supérieure à un seuil bas, prédéfini, de préférence égal à 0 ampère.

5. Réseau de bord selon la revendication 4,
**caractérisé en ce que**
le signal de commande (s3) ouvrant les moyens de commutation (S3) est appliqué au transistor (T1) des moyens de commutation dont le sens passant de la diode du substrat va du réseau de bord en direction du second accumulateur.

6. Réseau de bord selon l'une des revendications précédentes,
**caractérisé en ce que**
la gestion d'énergie électrique (12) termine l'opération de charge du second accumulateur (2) si une valeur d'état de charge du second accumulateur déterminée au cours de l'opération de charge atteint une valeur de consigne d'état de charge, prédéfinie.

7. Réseau de bord selon l'une des revendications 1 à 5,
**caractérisé en ce que**
la gestion d'énergie électrique (12) termine l'opération de charge du second accumulateur à la fin d'une durée de charge prédéfinie.

8. Réseau de bord selon l'une des revendications précédentes,
**caractérisé en ce que**
la gestion d'énergie électrique (12) met en oeuvre au moins une mesure supplémentaire favorisant l'opération de charge au cours de l'opération de charge du second accumulateur d'énergie.

9. Réseau de bord selon la revendication 8,
**caractérisé en ce que**
le moyen supplémentaire favorisant l'opération de charge est un relevage de la tension de consigne du générateur, une réduction de la puissance absorbée par les consommateurs ou un relèvement de la vitesse de rotation de ralenti.

10. Réseau de bord selon l'une des revendications précédentes,
**caractérisé en ce que**
l'un des consommateurs est un consommateur de forte puissance (15a, 15b), le consommateur de forte puissance étant constitué par les soupapes, l'appareil de commande et le moteur de la pompe d'un frein hydraulique, et les consommateurs de forte puissance peuvent être reliés par l'unité de charge et de coupure (16) commandée à la fois au premier accumulateur (1) et au second accumulateur (2), l'unité de charge et de coupure (16), commandée, comportant des premiers moyens de commutation (S1) par lesquels le premier accumulateur (1) est relié au consommateur de forte puissance (15a, 15b), l'unité de charge et de coupure (16), commandée, comporte des seconds moyens de commutation (S2) par lesquels le second accumulateur (2) est relié au réseau de bord (3) et l'unité de charge et de coupure (16) comporte des troisièmes moyens de commutation (S3) par lesquels le second accumulateur (2) est relié au consommateur de forte puissance (15a, 15b), les troisièmes moyens de commutation étant les moyens de commutation par lesquels se fait la charge du second accumulateur d'énergie (2).

11. Procédé de charge de la batterie supplémentaire d'un réseau de bord comportant une batterie principale et une batterie supplémentaire comprenant les étapes de procédé suivantes :
- démarrage de l'opération de charge si l'état de charge de la batterie supplémentaire passe en-dessous d'une valeur limite inférieure de l'état de charge,
- mesure du courant sortant de la batterie supplémentaire,
- interruption de l'opération de charge si l'intensité du courant sortant de la batterie supplémentaire est supérieure à un seuil bas prédéfini, de préférence 0 ampère,
- mesure de la tension du réseau de bord,
- poursuite de l'opération de charge si la tension du réseau de bord, mesurée, dépasse une valeur limite prédéfinie de la tension de charge,
- terminer l'opération de charge si la valeur de la tension de charge, calculée, de la batterie supplémentaire est atteinte au cours de l'opération de charge ou si un temps de charge actif prédéfini est terminé,
**caractérisé en ce qu'**
une gestion d'énergie (12) commande le déroulement des opérations, reçoit des signaux d'entrée de la détection d'état de batterie (18) qui déterminent la tension de batterie u(t), les courants de batterie i(t) et les températures de batterie δ (t) des deux batteries et fournit ainsi leur état de charge.

12. Procédé selon la revendication 11,
**caractérisé en ce qu'**
après un démarrage du moteur, on a une brève décharge de la batterie supplémentaire.

13. Procédé selon la revendication 12,
**caractérisé en ce que**
la décharge brève de la batterie supplémentaire est effectuée automatiquement après chaque opération de démarrage du véhicule.
